# EUROPEAN PATENT APPLICATION

(11) **EP 4 836 040 A1**
(43) Date of publication of application: **04.11.2026**
(21) Application number: 24909971.4
(22) Date of filing: 04.09.2024
(51) Int. Cl.: H01M 10/04

(54) **BATTERY, BATTERY ASSEMBLY AND ELECTRIC DEVICE**

(30) Priority: 28.12.2023 CN 202323640002 U
(71) Applicant: BYD Company Limited, Shenzhen, Guangdong 518118 (CN)
(72) Inventor: WANG, Xianping, Shenzhen, Guangdong 518118 (CN); LIU, Yanchu, Shenzhen, Guangdong 518118 (CN); ZHOU, Guishu, Shenzhen, Guangdong 518118 (CN); CHEN, Jiankang, Shenzhen, Guangdong 518118 (CN); ZHANG, Lu, Shenzhen, Guangdong 518118 (CN)
(74) Representative: Mathys & Squire
(86) International application number: PCT/CN2024/116869
(87) International publication number: WO 2025/139025

(57) **Abstract**

Provided in the present application are a battery, a battery assembly and an electric device. The battery includes a core, a cover plate assembly and an insulating film, wherein the core includes a first end face and a second end face arranged opposite each other, and a plurality of side faces, the plurality of side faces being connected between the first end face and the second end face; the cover plate assembly is connected to and covers one side face; and the insulating film completely covers the first end face, the second end face and the other side faces, and the insulating film further covers a peripheral side wall at the end of the cover plate assembly that is close to the core. The battery, the battery assembly and the electric device provided in the present application have a simple structure, low manufacturing cost and a high rate of space utilization.

## Description

### CROSS-REFERENCE TO RELATED APPLICATIONS

This application claims priority to the Chinese Patent Application No. 202323640002.0, entitled "BATTERY, BATTERY ASSEMBLY AND ELECTRIC DEVICE", which was submitted to the State Intellectual Property Office of China on December 28, 2023.The entire contents of the prior application are incorporated herein by reference.

### FIELD

The present application relates to the field of batteries, and in particular to a battery, a battery assembly and an electric device.

### BACKGROUND

With the progress of technology, the cost control requirements for batteries are more and more strict, including reducing the cost of battery sealing and insulating structures, thus reducing the overall manufacturing costs of batteries. In existing battery structures, to achieve insulation arrangement between the battery's core and the battery case, the battery covers both ends of the core with two spacer rings, then covers the top of the core with a cover plate, and finally wraps the other faces of the core with an insulating member to form an insulation arrangement between the core and the battery case. However, the arrangement using spacer rings results in a more complex structure and increased assembly difficulty, which increases the overall production cost of the battery. Moreover, the spacer rings occupy space within the battery case, leading to low overall space utilization.

### SUMMARY

In view of the shortcomings of the prior art, the present application provides a battery, a battery assembly and an electric device with simple structure, low cost and large space utilization rate.

In one aspect, the present application provides a battery including:
a core including a first end face and a second end face arranged opposite to each other, and a plurality of side faces, the plurality of side faces being connected between the first end face and the second end face;
a cover plate assembly being connected to and covering one side face; and
an insulating film completely covering the first end face, the second end face, and the other side faces, and the insulating film further covering a peripheral side wall at an end of the cover plate assembly close to the core.

In one possible embodiment, the insulating film includes a first region, a second region, and a third region connected in sequence;
the first region being bent relative to the second region, and the first region covering the first end face;
the second region covering the other side faces; the second region including a plurality of sub-regions, each of the sub-regions covering a corresponding one of the side faces; and
the third region being bent relative to the second region, the third region covering the second end face.

In one possible embodiment, a thickness of the insulating film is in the range of 0.02 to 0.15 mm.

In one possible embodiment, one side of the insulating film covering the first end face, the second end face, and the other side faces has adhesiveness.

In one possible implementation, the cover plate assembly includes:
a cover plate body covering the fourth side face;
a terminal-pole, one end of the terminal-pole being positioned between the cover plate body and the fourth side face, and the other end of the terminal-pole passing through the cover plate body; and
a pin, one end of the pin being arranged between the terminal-pole and the core, and the other end being electrically connected to a tab of the core.

In one possible embodiment, the cover plate assembly further includes an insulating member, the insulating member is arranged between the pin and the core.

In one possible embodiment, the pin includes a first portion, a second portion and a third portion connected in sequence;
the first portion being arranged between the terminal-pole and the core;
the second portion protruding towards the third side face relative to the first portion; and
the third portion protruding towards the first side face relative to the second portion, and the third portion being electrically connected to the tab of the core.

In one possible embodiment, a width of the second portion gradually increases in the direction from the first end face to the second end face in a direction in which the second portion connects one end of the first portion to the second portion connects one end of the third portion.

In one possible embodiment, the first portion is embedded in the cover plate body, and a side of the first portion facing away from the terminal-pole is flush with a side of the cover plate body facing the core.

In another aspect, the present application provides a battery assembly including:
the battery described above.

In yet another aspect, the present application provides an electric device, including:
the battery assembly described above; and
a load electrically connected to the battery assembly.

In the battery, battery assembly and electrical equipment provided in the present application, the first end face, the second end face, the first side face, the second side face and the third side face of the core are completely covered by an insulating film, and the cover plate assembly is arranged on the fourth side face, ensuring insulation between the core and the external environment. Compared with the existing structure in which the end cover or the spacer rings are arranged on the first end face and the second end face, the battery provided in the present application omits the arrangement of the end cover or the spacer ring, and directly covers the first end face and the second end face with an insulating film, without using the end cover to cover the first end face and the second end face, to ensure that the structure of the battery is simpler and the manufacturing cost of the battery is lower. Moreover, by omitting the end cap, the core space utilization rate of the battery is high.

### BRIEF DESCRIPTION OF THE DRAWINGS

In order to more clearly explain the technical solutions of the embodiments of the present application, the following will briefly describe the accompanying drawings that need to be used in the embodiments. Obviously, the drawings in the following description are only some embodiments provided in the embodiments of the present application, and other drawings can be obtained from those of ordinary skill in the art without exerting creative efforts.
FIG. 1 is an assembly structure diagram of 1 of a battery according to an embodiment of the present application;
FIG. 2 is an assembly structure diagram 2 of a battery according to an embodiment of the present application;
FIG. 3 is an assembly diagram of a core and a cover plate assembly according to an embodiment of the present application;
FIG. 4 is an assembly structure diagram of a cover plate assembly according to an embodiment of the present application;
FIG. 5 is a structural diagram showing an unfolded insulating film according to an embodiment of the present application;
FIG. 6 is a structural diagram of an insulating film bent according to an embodiment of the present application;
FIG. 7 is an exploded view of a cover plate assembly according to an embodiment of the present application;
FIG. 8 is a structural diagram of a pin provided in an embodiment of the present application.

Reference Signs:
100-battery;
10-core; 11-first end face; 12-second end face; 13-first side face; 14-second side face; 15-third side face; 16-fourth side face; 17-tab;
30-cover plate assembly; 31-cover plate body; 32-terminal-pole; 33-pin; 34-insulating member;
50-insulating film; 51-first region; 52-second region; 53-third region;
311-sealing ring; 312-spacer ring; 313-optical cover plate; 314 insulating sleeve; 315-terminal;
331-first portion; 332-second portion; 333-third portion;
521-first sub-region; 522-second sub-region; 523-third sub-region.

### DETAILED DESCRIPTION

The technical solution of the present application will be clearly and completely described below with reference to the accompanying drawings in the embodiments of the present application. Obviously, the described embodiments are only some, but not all, of the embodiments of the present application. Based on the embodiments in the present application, all other embodiments obtained by those of ordinary skill in the art without creative efforts fall within the scope of protection of the present application.

The following description of the embodiments is made with reference to additional illustrations to illustrate specific embodiments in which the present application may be implemented. Directional terms mentioned in the description of the present application, for example, "upper", "lower", "front", "rear", "left", "right", "inner", "outer", "top", "side", "bottom", "top wall", "side wall", "bottom wall", "inner side wall", "outer side wall", "length direction", "width direction", "height direction", and the like, are directions only referring to the additional drawings, and therefore, directional terms are used for better and clearer illustration and understanding of the present application, and do not indicate or imply that the device or element referred to must have a specific orientation, be constructed and operate in a specific orientation, and therefore will not be construed as limiting the present application. In the description of the present application, for example, "first", "second", "third", "fourth", and the like are only used to distinguish the objects described, and do not have any sequential or technical meaning. In the description of the present application, "connection" and "coupling" include direct connection (coupling) and indirect connection (coupling) unless otherwise specified.

The present application provides an electric device including a battery assembly and a load electrically. The battery assembly is used to electrically connect to and power the load electrically for optimised operation of the load electrically. It will be understood that the electric device provided in the present application includes, but is not limited to, vehicles, industrial equipment, household appliances, office equipment, and the like, and the present application is not limited thereto.

The present application also provides a battery assembly including batteries, the number of batteries may be a plurality of batteries, and the plurality of batteries are stacked to form a battery assembly. The battery assembly provided in the present application includes, but is not limited to, battery modules, battery packs and other battery-containing components, and the like, and the present application is not limited thereto.

Because users have higher and higher requirements for electrical equipment, the complexity of battery structures and production costs of battery assemblies and batteries, which are the main parts of electrical equipment, have a great influence on the structural complexity and production costs of battery assemblies and electric devices. Cost control for a battery includes reducing the cost of the battery sealing insulating structure, thereby reducing the manufacturing cost of the battery as a whole. In the existing battery structures, in order to form an insulation arrangement between the core of the battery and the battery case, the battery covers both ends of the core by two spacer rings, then covers the top of the core by a cover plate, and then covers other faces of the core by an insulating member, so as to form an insulation arrangement between the core and the battery. However, through the arrangement of the spacer rings, the structure is complicated, and the assembly is more difficult, and it increases the overall production cost of the battery. Moreover, the spacer ring occupies the accommodating space of the battery case, so that the overall space utilization rate of the battery is not high. In view of this, the present application provides a battery, the battery has a simple structure, low cost and large space utilization rate, and can further make the overall structure of an electric device simple and low production cost.

The battery provided in this application will be introduced in detail below.

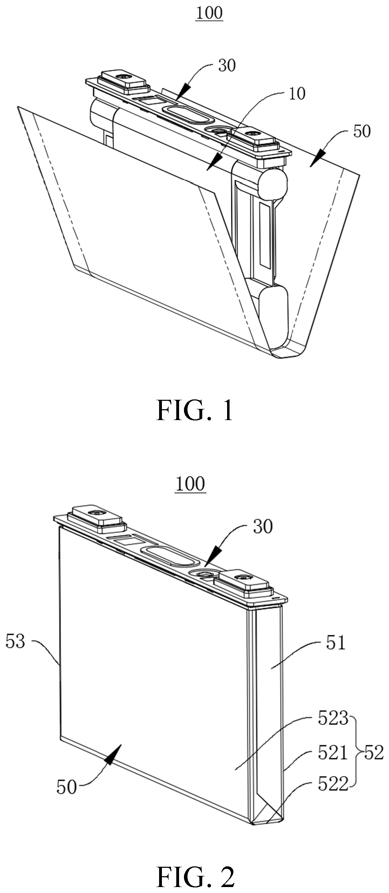

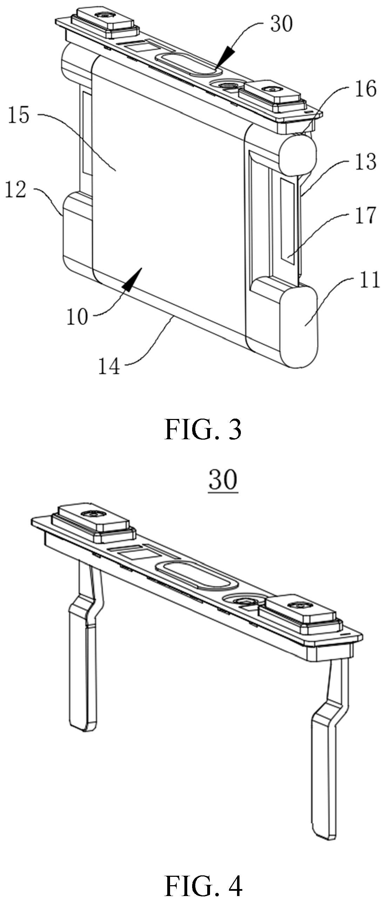

Reference is made to FIGS. 1 to 4. FIG. 1 is an assembly structure diagram of 1 of a battery according to an embodiment of the present application, FIG. 2 is an assembly structure diagram 2 of a battery according to an embodiment of the present application, FIG. 3 is an assembly diagram of a core and a cover plate assembly according to an embodiment of the present application, and FIG. 4 is an assembly structure diagram of a cover plate assembly according to an embodiment of the present application.

The present embodiment provides a battery 100. The battery 100 includes a core 10, a cover plate assembly 30 and an insulating film 50. The core 10 is used to form a power source of the battery 100. The cover plate assembly 30 covers one side face of one end of the core 10. The insulating film 50 is wrapped around the other side face of the core 10, excluding the end covered by the cover plate assembly 30. The insulating film 50 also overlaps with the peripheral side wall of one end of the cover plate assembly 30 close to the core 10, to ensure that the cover plate assembly 30 and the insulating film 50 can completely wrap around the core 10.

The structure of the hexagonal core 10 is taken as an example. The core 10 includes a first end face 11 and a second end face 12 arranged opposite to each other, and also includes a first side face 13, a second side face 14, a third side face 15, and a fourth side face 16 connected in sequence, and the first side face 13, the second side face 14, the third side face 15, and the fourth side face 16 are all connected between the first end face 11 and the second end face 12. The first side face 13 and the third side face 15 are arranged opposite to each other, and the second side face 14 and the fourth side face 16 are arranged opposite to each other. The cover plate assembly 30 is connected to and covers the fourth side face 16 to insulate the fourth side face 16 of the core 10. The insulating film 50 is bent to completely cover the first end face 11, the second end face 12, the first side face 13, the second side face 14, and the third side face 15 of the core 10, thereby insulating the first end face 11, the second end face 12, the first side face 13, the second side face 14, and the third side face 15 of the core 10.

In the battery 100 provided in the present application, the first end face 11, the second end face 12, the first side face 13, the second side face 14, and the third side face 15 are completely covered by the insulating film 50. Additionally, the cover plate assembly 30 is arranged on the fourth side face 16, ensuring overall insulation between the core 10 and the external environment. Compared to existing arrangements that utilize end caps on the first end face 11 and the second end face 12 for insulation, the battery 100 presented in this application omits the end cap arrangement, directly covering the first end face 11 and the second end face 12 with the insulating film 50. This avoids the need for end caps, resulting in a simpler structure and lower cost for the battery 100. Furthermore, by omitting the end cap arrangement, the space utilization rate of the core 10 in the battery 100 is higher. That is, for batteries 100 of the same volume, the core 10 in the battery 100 provided in this application can be arranged to be larger, which is beneficial to improving the capacitance of the battery 100.

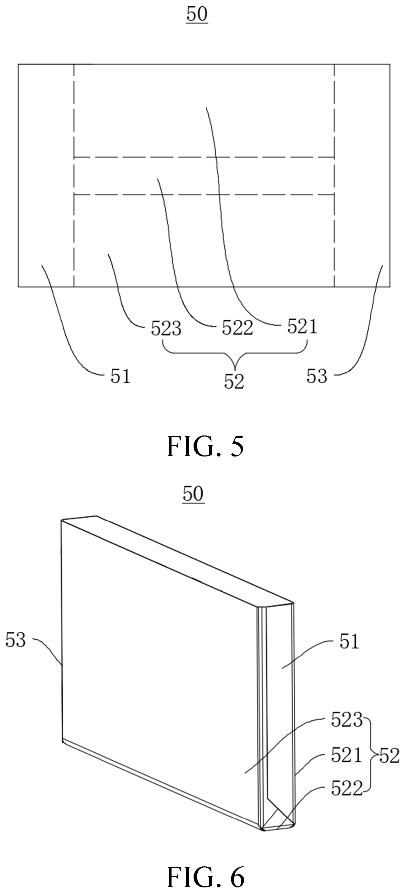

Referring to FIGS. 1 to 6, FIG. 5 is a structural diagram showing an unfolded insulating film according to an embodiment of the present application, and FIG. 6 is a structural diagram of an insulating film bent according to an embodiment of the present application.

In a specific embodiment, the insulating film 50 includes a first region 51, a second region 52, and a third region 53 which are sequentially connected. The first region 51 is bent relative to the second region 52, and the first region 51 completely covers the first end face 11 to insulate the first end face 11 of the core 10. The second region 52 covers the other side faces of the core 10 except the end covered by the cover plate assembly 30, that is, the second region 52 completely covers the first side face 13, the second side face 14, and the third side face 15 to insulate the first side face 13, the second side face 14, and the third side face 15 of the core 10. The third region 53 is bent relative to the second region 52, and the third region 53 completely covers the second end face 12 to insulate the second end face 12 of the core 10. Since the first region 51 completely covers the first end face 11, the second region 52 completely covers the first side face 13, the second side face 14, and the third side face 15, and the third region 53 completely covers the second end face 12, the insulating film 50 insulates the first end face 11, the second end face 12, the first side face 13, the second side face 14, and the third side face 15 of the core 10, and the fourth side face 16 of the core 10 is insulated by the cover plate assembly 30, to ensure that the core 10 of the battery 100 forms a complete insulating structure.

Further, the second region 52 includes a plurality of sub-regions including a first sub-region 521, a second sub-region 522, and a third sub-region 523 that are sequentially connected. The first sub-region 521 completely covers the first side face 13 to insulate the first side face 13 of the core 10. The second sub-region 522 is bent relative to the first sub-region 521, and the second sub-region 522 completely covers the second side face 14 to insulate the second side face 14 of the core 10. The third sub-region 523 is bent relative to the second sub-region 522, and the third sub-region 523 completely covers the third side face 15 to insulate the third side face 15 of the core 10. Since the first sub-region 521 completely covers the first side face 13, the second sub-region 522 completely covers the second side face 14, and the third sub-region 523 completely covers the third side face 15, the second region 52 of the insulating film 50 insulates the first side face 13, the second side face 14, and the third side face 15 of the core 10.

Referring to FIGS. 1 to 6, in a specific embodiment, the thickness of the insulating film 50 is in the range of [0.02, 0.15] mm. Optionally, the thickness of the insulating film 50 may be any value of 0.02 mm, 0.05 mm, 0.08 mm, 0.11 mm, 0.15 mm, etc. When the insulating film 50 is too thin, the insulating film 50 has a poor insulating effect on the core 10, and when the insulating film 50 is too thick, the bending of the insulating film 50 and the overall structural dimension of the battery 100 are affected. By limiting the thickness range of the insulating film 50 to 0.02 to 0.15 mm, the impact of the insulating film 50 on the overall dimensions of the battery 100 can be reduced while ensuring the insulation effect of the insulating film 50 on the core 10. This facilitates the miniaturization of the battery 100 and also facilitates the bending of the insulating film 50, making the bonding between the insulating film 50 and the core 10 more secure.

Referring to FIGS. 1 to 6, in a specific embodiment, the insulating film 50 has adhesiveness on one side covering the first end face 11, the second end face 12, the first side face 13, the second side face 14, and the third side face 15. In other words, the insulating film 50 may have a structure similar to an adhesive tape, and an adhesive layer (not shown) is arranged on the insulating film 50, and the adhesive layer is arranged on a side where the insulating film 50 is bonded to the first end face 11, the second end face 12, the first side face 13, the second side face 14, and the third side face 15. By arranging the insulating film 50 with adhesive properties or an adhesive layer on the side covering the core 10, the insulating film 50 can adhere to the core 10 with better stability, reducing the risk of the insulating film 50 falling off from the surface of the core 10, thereby ensuring the insulating effect of the insulating film 50 on the core 10.

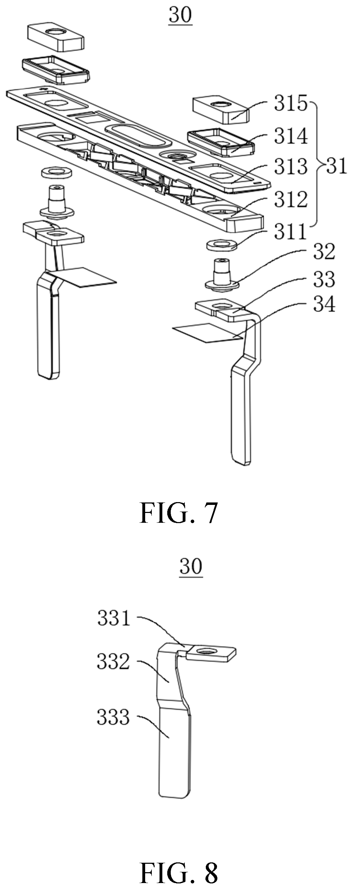

Reference is made to FIGS. 1, 3, 7 and 8. FIG. 7 is an exploded view of a cover plate assembly according to an embodiment of the present application, and FIG. 8 is a structural diagram of a pin provided in an embodiment of the present application.

In a specific embodiment, the cover plate assembly 30 includes a cover body 31, a terminal-pole 32, a pin 33, and an insulating member 34. The cover plate body 31 covers the fourth side face 16 of the core 10. One end of the terminal-pole 32 is positioned between the cover plate body 31 and the fourth side face 16, and the other end of the terminal-pole 32 passes through the cover plate body 31. One end of the pin 33 is arranged between the terminal-pole 32 and the core 10, and the other end is bent and electrically connected to a tab 17 of the core 10. The pin 33 is electrically connected between the terminal-pole 32 and the tab 17 of the core 10, to ensure that the core 10 and the terminal-pole 32 are electrically connected, and the electric energy in the core 10 is transferred to the outside of the battery 100 through the terminal-pole 32. The insulating member 34 is arranged between one end of the pin 33 close to the terminal-pole 32 and the core 10. The insulating member 34 is arranged to ensure that one end of the pin 33 connected to the terminal-pole 32 is insulated from the core 10.

More specifically, the cover plate body 31 includes a sealing ring 311, a spacer ring 312, an optical cover plate 313, an insulating sleeve 314, and a terminal 315. The sealing ring 311 is sleeved on the terminal-pole 32, the spacer ring 312 is laminated with the optical cover plate 313, and the spacer ring 312 is bonded to the fourth side face 16 of the core 10. The terminal-pole 32 passes through the spacer ring 312 and the optical cover plate 313, and the seal ring 311 is positioned between the side of the spacer ring 312 facing away from the optical cover plate 313 and an end portion of the terminal 315. The insulating sleeve 314 is arranged on the side of the optical cover plate 313 facing away from the spacer ring 312, the terminal-pole 32 passes through the insulating sleeve 314, and the terminal 315 is electrically connected to one end of the terminal-pole 32 passing through the insulating sleeve 314, to ensure that electric energy of the core 10 flows out from the interior of the battery 100 in sequence through the pin 33, the terminal-pole 32, and the terminal 315.

Referring to FIG. 1, FIG. 3, FIG. 7, and FIG. 8, in a specific embodiment, the pin 33 includes a first portion 331, a second portion 332, and a third portion 333 connected in sequence. The first portion 331 is parallel to the spacer ring 312 of the cover plate body, and is laminated between the terminal-pole 32 and the fourth side face 16 of the core 10. The second portion 332 is bent relative to the first portion 331, the second portion 332 is perpendicular to the first portion 331, and the second portion 332 protrudes towards the third side face 15. The third portion 333 is bent relative to the second portion 332, the third portion 333 is perpendicular to the first portion 331, the third portion 333 is parallel to the second portion 332, and the third portion 333 protrudes towards the first side face 13, the third portion 333 is electrically connected to the tab 17 of the core 10. By causing the second portion 332 to protrude with respect to the first portion 331 and the third portion 333 in a direction toward the third side face 15 of the core 10, the second portion 332 of the pin 33 can form a clearance structure with respect to the tab 17 of the core 10, thereby reducing the interference of the pin 33 with the tab 17 of the core 10, thereby reducing the influence of the pin 33 on the dressing area on the tab 17 of the core 10.

Further, in the pin 33, the width of the second portion 332 in the direction from the first end face 11 to the second end face 12 gradually increases in the direction from which the second portion 332 is connected to one end of the first portion 331 to the direction from which the second portion 332 is connected to one end of the third portion 333. By gradually increasing the width of the second portion 332 of the pin 33 in the direction from the first portion 331 to the third portion 333, the contact between the pin 33 and the tab 17 of the core 10 can be further reduced, and the interference between the pin 33 and the tab 17 of the core 10 at the circular arc can be reduced, thereby reducing the influence of the pin 33 on the dressing area of the tab 17 of the core 10.

Referring to FIGS. 1, 3, 7, and 8, in a specific embodiment, the first portion 331 is embedded in the spacer ring 312 of the cover plate body 31, and the side of the first portion 331 facing away from the terminal-pole 32 is flush with the side of the spacer ring 312 of the cover plate body 31 facing the core 10. By embedding the first portion 331 of the pin 33 into the spacer ring 312 of the cover plate body, the peripheral side of the first portion 331 of the pin 33 can be effectively insulated to prevent creepage between the first portion 331 of the pin 33 and the core 10. Further, the side of the first portion 331 of the pin 33 close to the second portion 332 is flush with the side of the spacer ring 312 of the cover plate body facing the core 10, that is, the side of the first portion 331 of the pin 33 close to the second portion 332 is located on the same plane as the side of the spacer ring 312 of the cover plate body facing the core 10, to ensure that the insulating member 34 can attach the first portion 331 of the pin 33 to the side of the spacer ring 312 facing the core 10, and the risk of the insulating member 34 falling off can be reduced.

The above are some embodiments of the present application, and it will be pointed out that those of ordinary skill in the art can make several improvements and modifications without departing from the principles of the present application, and these improvements and modifications are also regarded as the scope of protection of the present application.

## Claims

1. A battery (100) comprising:
a core (10) comprising a first end face (11) and a second end face (12) arranged opposite to each other , and a plurality of side faces, the plurality of side faces being connected between the first end face (11) and the second end face (12);
a cover plate assembly (30) being connected to and covering one side face; and
an insulating film (50) completely covering the first end face (11), the second end face (12), and the other side faces, and the insulating film (50) further covering a peripheral side wall at an end of the cover plate assembly (30) close to the core (10).

2. The battery (100) according to claim 1, wherein:
the insulating film (50) comprises a first region (51), a second region (52), and a third region (53) connected in sequence;
the first region (51) is bent relative to the second region (52), and the first region (51) covers the first end face (11);
the second region (52) covers the other side faces; the second region (52) comprises a plurality of sub-regions, each of the sub-regions covers a corresponding one of the side faces;
the third region (53) is bent relative to the second region (52), the third region (53) covers the second end face (12).

3. The battery (100) according to claim 1 or 2, wherein:
a thickness of the insulating film (50) is in the range of 0.02 to 0.15 mm.

4. The battery (100) according to any one of claims 1 to 3, wherein:
one side of the insulating film (50) covering the first end face (11), the second end face (12), and the other side faces has adhesiveness.

5. The battery (100) according to any one of claims 1 to 4, wherein the cover plate assembly (30) comprises:
a cover plate body (31) covering one of the side faces;
a terminal-pole (32), one end of the terminal-pole being positioned between the cover plate body (31) and one of the side faces, and the other end of the terminal-pole passing through the cover plate body (31); and
a pin (33), one end of the pin (33) being arranged between the terminal-pole (32) and the core (10), and the other end being electrically connected to a tab (17) of the core (10).

6. The battery (100) according to claim 5, wherein:
the cover plate assembly (30) further comprises an insulating member (34), the insulating member (34) is arranged between the pin (33) and the core (10).

7. The battery (100) according to claim 5 or 6, wherein:
the pin (33) comprises a first portion (331), a second portion (332) and a third portion (333) connected in sequence;
the first portion (331) is arranged between the terminal-pole (32) and the core (10);
the second portion (332) protrudes towards the other side faces relative to the first portion (331);
the third portion (333) protrudes towards one of the side faces relative to the second portion (332), and the third portion (333) is electrically connected to the tab (17) of the core (10).

8. The battery (100) according to claim 7, wherein:
a width of the second portion (332) gradually increases in the direction from the first end face (11) to the second end face (12) in a direction in which the second portion (332) connects one end of the first portion (331) to the second portion (332) connects one end of the third portion (333).

9. The battery (100) according to claim 7 or 8, wherein:
the first portion (331) is embedded in the cover plate body (31), and a side of the first portion (331) facing away from the terminal-pole (32) is flush with a side of the cover plate body (31) facing the core (10).

10. A battery assembly comprising:
the battery (100) of any one of claims 1 to 9.

11. An electric device comprising:
the battery assembly of claim 10; and
a load electrically, the load electrically connected to the battery assembly.
